# EUROPÄISCHE PATENTSCHRIFT

(11) **EP 1 445 059 B1**
(45) Veröffentlichungstag und Bekanntmachung des Hinweises auf die Patenterteilung: **29.04.2009**
(21) Anmeldenummer: 04006557.5
(22) Anmeldetag: 15.10.1999
(51) Int. Cl.: B23P 19/06, F16B 5/04, F16B 17/00, F16B 37/06

(54) **Funktionselement, insbesondere Befestigungselement und ein aus dem Funktionselement und einem Blechteil bestehenden Zusammenbauteil**
Function element, particularly fastening element and assembly part consisting of the function element and a sheet plate
Elément fonctionnel, notamment élément de fixation et ensemble de montage comprenant l'élément fonctionnel et une pièce de tôle

(30) Priorität: 16.10.1998 DE 19847838; 30.07.1999 DE 19935923; 13.10.1999 EP 99120400
(43) Veröffentlichungstag der Anmeldung: 11.08.2004
(62) Teilanmeldung aus: 99120559.2
(73) Patentinhaber: Profil Verbindungstechnik GmbH & Co. KG, 61381 Friedrichsdorf (DE)
(72) Erfinder: Humpert, Richard, Dr., 61191 Rosbach v.d.H (DE); Babey, Jiri, 35423 Lich (DE); Diehl, Oliver, 61350 Bad Homburg (DE)
(74) Vertreter: Manitz, Finsterwald & Partner GbR

(56) Entgegenhaltungen:
- DE-A- 3 233 437
- FR-A- 2 388 636
- GB-A- 827 245
- GB-A- 846 294
- US-A- 3 871 264
- US-A- 5 339 509

## Beschreibung

Die Erfindung betrifft ein Funktionselement, insbesondere ein Befestigungselement nach dem Oberbegriff des Anspruchs 1 und ein aus dem Funktionselement und dem Bauteil bestehenden Zusammenbauteil nach dem Oberbegriff des Anspruchs 5.

Ein Funktionselement und ein Zusammenbauteil dieser Art sind aus der GB 846,294 bekannt.

Funktionselemente, die auch als Funktionsträger bezeichnet werden, wie beispielsweise Bolzen, werden z.B. im Automobilbau an Blechteilen angebracht, um die verschiedensten Bauteile mit den Blechteilen verbinden zu können.

Aus der DE 196 47 831 A1 ist ein Verfahren zur Anbringung eines Funktionselementes an einem Blechteil bekannt, bei dem mittels einer einteiligen Umformmatrize, gegen die das Funktionselement unter Zwischenlage des Blechteils gepreßt wird, Blechmaterial mit einem Hinterschneidungsmerkmal des Funktionselementes verhakt wird.

Des weiteren ist es bekannt, Bleche ohne Verwendung zusätzlicher Verbindungselemente dadurch miteinander zu verbinden, dass die Bleche auf eine Matrize gedrückt und mittels eines Stempels in Richtung eines feststehenden Ambosses gezogen werden. Bewegliche Lamellen der Matrize, die seitlich des Ambosses angeordnet sind, geben nach und bewegen sich radial nach außen, wenn das untere Blechteil den Amboß erreicht. Dadurch entsteht ein die Bleche miteinander verriegelnder runder Kragen.

Bei dem Funktionselement gemäß der eingangs genannten GB 846,429 handelt es sich um einen Stehbolzen, der in einem Endbereich hohl ausgebildet ist und darüber hinaus einen durchgehenden Querschlitz aufweist und sich in Richtung des freien Endes des Endbereichs verjüngt, damit er als Gewindebohrer verwendet werden kann und somit das eigene Gewinde in einen Sachloch des Bauteils schneiden kann. Dabei dienen die scharfen Kanten des durchgehenden Querschlitzes als Schneidkanten und der Hohlraum des Endbereichs als Aufnahmeraum für die so erzeugten Späne. Der Stehbolzen ist somit im Endbereich hohl und weist keine geschlossene Stirnseite auf. Ferner dient der Querschlitz dem Schneiden des Gewindes und funktioniert nicht als Verdrehsicherung.

Aufgabe der Erfindung ist es, ein Funktionselement bzw. ein Zusammenbauteil der eingangs genannten Art zu schaffen, das eine möglichst einfach herstellbare und gute Verbindung zwischen einem Blechteil und einem Funktionselement gewährleistet.

Gelöst wird diese Aufgabe nach der Erfindung durch ein Funktionselement insbesondere Befestigungselement, das als insbesondere in einem Walzverfahren hergestellter Gewindestift ausgebildet ist, der zumindest im Wesentlichen einen konstanten Außendurchmesser und einen Endbereich aufweist, der bei der Anbringung des Funktionselementes an einem Bauteil mit diesem in Eingriff gelangt, wobei Material des Bauteils in Eingriff mit einem Gewindegang oder mehreren Gewindegängen, der bzw. die eine Hinterschneidung darstellen, gelangt, wobei sich das Funktionselements dadurch auszeichnet, dass der Gewindestift im Endbereich eine geschlossene Stirnseite aufweist und dass mindestens ein Verdrehsicherungsmerkmal in Form einer Erhebung oder einer Vertiefung im Endbereich des Gewindestifts vorgesehen ist, der bei Anbringung des Funktionselementes an ein das Bauteil bildende Blechteil mit diesem in Eingriff gelangt.

Das entsprechende Zusammenbauteil bestehend aus wenigstens einem Bauteil und mindestens einem Funktionselement, insbesondere Befestigungselement, das als insbesondere in einem Walzverfahren hergestellter Gewindestift ausgebildet ist, der zumindest im Wesentlichen einen konstanten Außendurchmesser und einen Endbereich aufweist, der bei der Anbringung des Funktionselementes an dem Bauteil mit diesem in Eingriff gelangt, wobei Material des Bauteils in Eingriff mit einem Gewindegang oder mehreren Gewindegängen des Gewindestifts, der bzw. die eine Hinterschneidung darstellen, in den Endbereich desselben gelangt, zeichnet sich dadurch aus, dass der Gewindestift im Endbereich eine geschlossene Stirnseite aufweist und dass mindestens ein Verdrehsicherungsmerkmal in Form einer Erhebung oder einer Vertiefung im Endbereich des Gewindestifts vorgesehen ist, und dass das als Blechteil vorliegende Bauteil im Endbereich des Gewindestiftes in die Hinterschneidung durch umformtechnisches Fügen im Wesentlichen formschlüssig verbunden oder verhakt ist und in Eingriff mit dem Verdrehsicherungsmerkmal steht.

Erfindungsgemäß erfolgt die Anbringung des Funktionselementes an dem Blechteil durch umformtechnisches Fügen, wobei durch das Vorsehen eines beweglich gelagerten Formteils der Matrize, das in der Lage ist, Blechmaterial in eine Hinterschneidung des Funktionselementes zu drücken, es nicht notwendig ist, das Funktionselement und/oder die Matrize mit komplizierten Strukturen zu versehen, die für ein formschlüssiges Verbinden oder Verhaken des Funktionselementes mit dem Blechteil sorgen.

Hierdurch können die Funktionselemente, die entweder in an sich bekannter Weise durch Kaltschlagen oder durch andere preisgünstige Verfahren hergestellt werden, und/oder die Matrizen kostengünstig hergestellt werden.

Ferner ist es möglich, das beweglich gelagerte Formteil der Matrize in Abhängigkeit von der Ausgestaltung des Funktionselementes, insbesondere von der Ausführung und/oder der Lage der Hinterschneidung des Funktionselementes, gezielt derart auszubilden und anzuordnen, dass zum einen die Matrize möglichst einfach aufgebaut sein kann und zum anderen nur die für den jeweiligen Anwendungszweck erforderliche Menge an Blechmaterial in die Hinterschneidung gedrückt wird.

Darüber hinaus kann das beweglich gelagerte Formteil als ein separates Bauteil ausgebildet werden, welches z.B. zur Anpassung an unterschiedliche Funktionselemente oder aufgrund von Verschleiß ausgewechselt werden kann, ohne dass die gesamte Matrize ausgetauscht werden muß.

Gemäß einer bevorzugten Ausführungsform wird das Blechteil zumindest im Bereich des Funktionselementes bei dessen Anbringung am Blechteil weder perforiert noch gelocht.

Hierdurch ist das Blechteil auch im Anschluß an das Anbringen des Funktionselementes nach wie vor absolut flüssigkeits- und/oder gasdicht und kann daher auch in Umgebungen, in denen derartige Eigenschaften unverzichtbar sind, eingesetzt werden.

Gemäß einer weiteren bevorzugten Ausführungsform wird das Formteil mittels des zur Anbringung am Blechteil in Richtung einer Längsachse der Matrize bewegten Funktionselementes bewegt.

Hierdurch ist weder ein separater Antrieb für das Formteil noch eine Steuereinrichtung erforderlich, die für den richtigen Ablauf der Bewegung des Formteils sorgt. Vielmehr kann ein automatisches, selbststeuerndes Verfahren verwendet werden, das die Anbringung des Funktionselementes am Blechteil erheblich vereinfacht.

Gemäß einem weiteren bevorzugten Ausführungsbeispiel wird das Blechmaterial erst in die Hinterschneidung gedrückt und mit Verdrehsicherungsmerkmalen in Eingriff gebracht, nachdem das Blechteil durch das zur Anbringung am Blechteil in Richtung einer Längsachse der Matrize bewegte Funktionselement zumindest teilweise umgeformt, insbesondere mit einer etwa kragen- oder topfförmigen Ausformung versehen worden ist.

Hierdurch wird es ermöglicht, das Blechteil durch das gegen das Blechteil gepresste Funktionselement umzuformen, um eine Vertiefung im Blechteil für das Funktionselement auszubilden. Mittels des beweglich gelagerten Formteils der Matrize kann dann Blechmaterial in die durch das Gewinde des Funktionselementes ausgebildete Hinterschneidung gedrückt werden. Auf diese Weise wird der Endbereich des Funktionselementes von Blechmaterial zumindest teilweise derart umschlossen, dass eine formschlüssige, zur Übertragung von in axialer Richtung wirkenden Kräften ausreichend feste Verbindung zwischen dem Funktionselement und dem Blechteil geschaffen wird.

Weitere bevorzugte Ausführungsformen des erfindungsgemäßen Funktionselements und des erfindungsgemäßen Zusammenbauteils sind in den Ansprüchen, der Beschreibung sowie der Zeichnung angegeben.

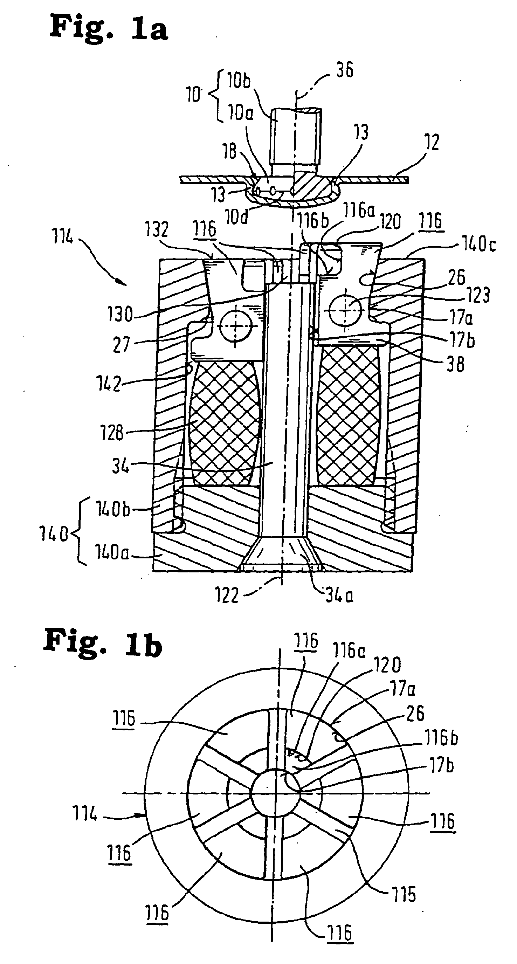

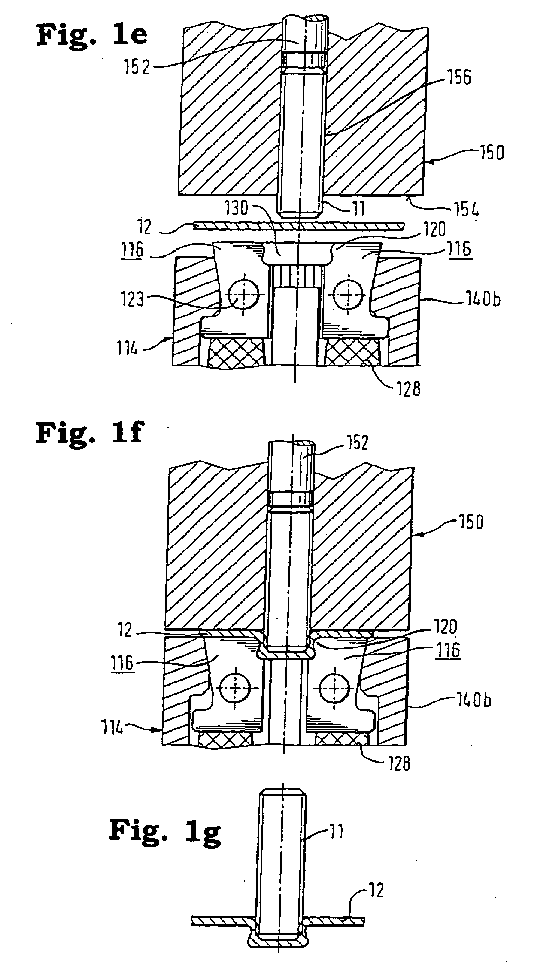

Die Erfindung wird im folgenden anhand von Ausführungsbeispielen unter Bezugnahme auf die Zeichnung beschrieben, wobei die Fig. 1a bis 1d Ausführungen von Matrizen zeigen, die mit einem Funktionselement verwendet werden, das kein erfindungsgemäßes Element darstellt, die aber in leicht abgeänderter Form für die Anbringung von erfindungsgemäßen Funktionselementen verwendbar sind und die weiteren Figuren 1e bis 1g, 2, 1a, 1b und 4a bis 4e sich mit erfindungsgemäßen Funktionselementen sowie deren Anbringung an Blechteilen befassen, konkret zeigen:
- Fig. 1a: eine Ausführungsform einer Matrize in einer geschnittenen Seitenansicht, die in einem links und einem rechts einer Längsachse dargestellten Bereich gleichzeitig zwei unterschiedliche Betriebsstellungen der Matrize zeigt,
- Fig. 3b1b: die Matrize von Fig. 1a in einer Draufsicht,

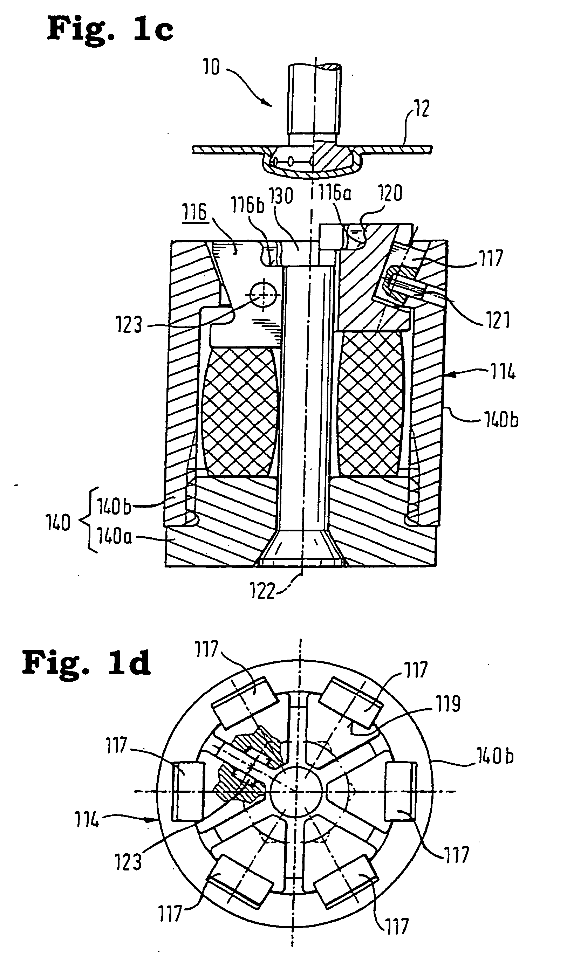

- Fig. 1c: eine bevorzugte Variante der Matrize der Fig. 1a,
- Fig. 1d: die Matrize der Fig. 1a in einer Draufsicht
- Fig. 1e: eine schematische Darstellung der Verwendung der Matrize der Fig. 1a zur Anbringung eines als Gewindestift realisierten Funktionselements, in einer Ausgangsposition gezeigt,
- Fig. 1f: die Vorrichtung der Fig. 1e in der Endposition gezeigt,

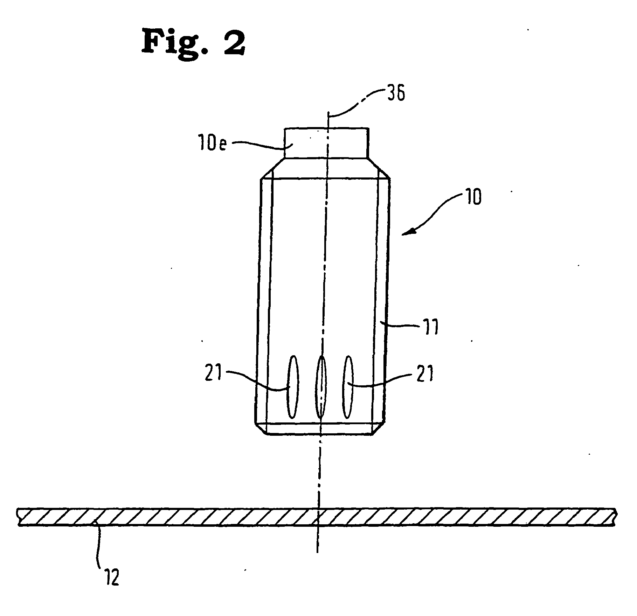

- Fig. 2: ein erfindungsgemäß als Gewindestift ausgebildetes Funktionselement vor der Anbringung an einem Blechteil,

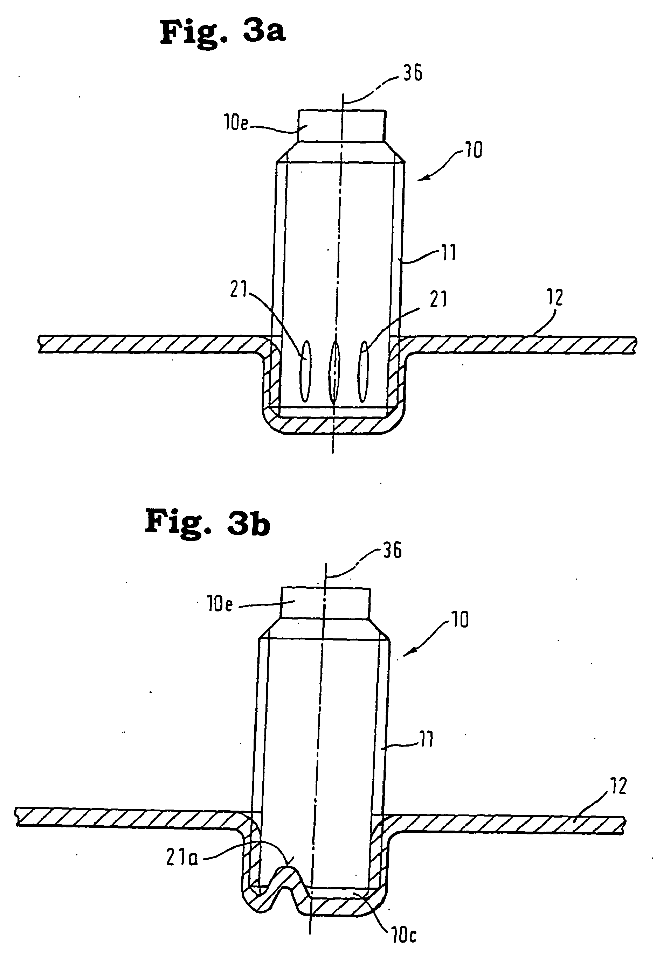

- Fig. 3a: das als Gewindestift ausgebildete Funktionselement von Fig. 2 im am Blechteil angebrachten Zustand,
- Fig. 3b: ein an einem Blechteil angebrachtes, als Gewindestift gemäß einer weiteren Ausführungsform ausgebildetes Funktionselement,

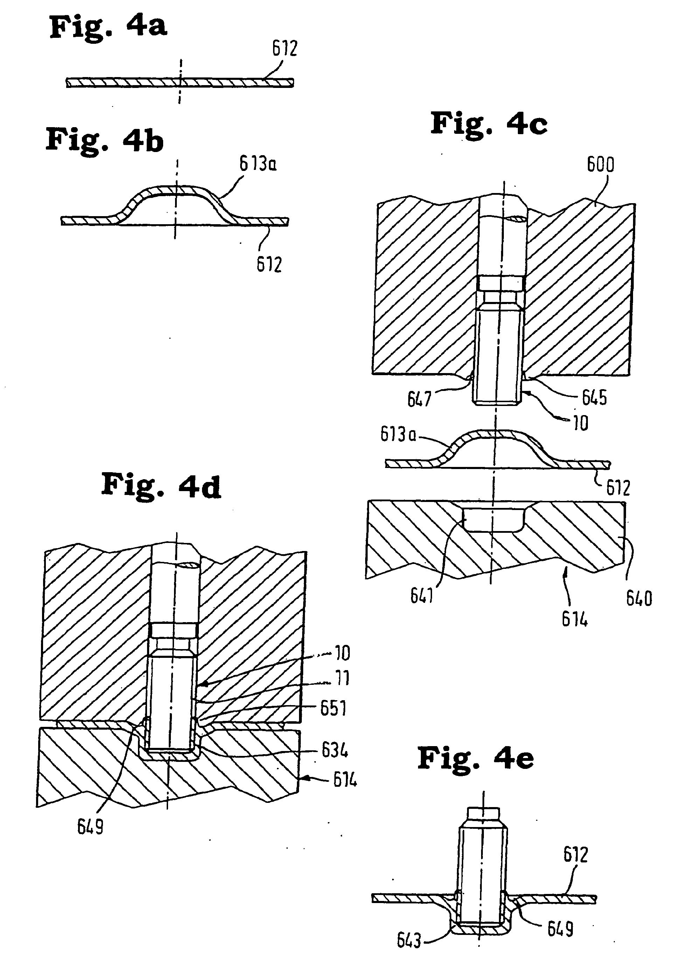

- Fig. 4a -4e: eine Zeichnungsreihe zur Darstellung einer anderen Möglichkeit der Anbringung eines als Gewindestift ausgebildeten Elements an ein Blechteil.

Die Matrize 114 gemäß der in den Fig. 1a und 1b dargestellten Ausführungsform weist in axialer Richtung verschiebbare Formteile 116 auf, die in einer in einem zweiteilig ausgeführten Block 140 ausgebildeten Vertiefung 142 - wie Fig. 3b1b zeigt - nach Art von Tortenstücken um ein zylindrisches Anschlagelement 34 der Matrize 114 herum verteilt angeordnet sind. Zwischen den Formteilen 116 sind spalt-artige Zwischenräume 115 vorgesehen. Der Block 140 umfaßt ein Bodenteil 140a und ein Wandteil 140b, die miteinander verschraubt sind oder auf andere Art und Weise zum Zusammensetzen und Zerlegen der Matrize 114 lösbar miteinander verbunden werden können.

Die obere Stirnseite des Anschlagelementes 34, dessen Längsachse mit der Längsachse 122 der Matrize 114 zusammenfällt, bildet den zentralen Teil des Bodens eines im übrigen von den Formteilen 116 begrenzten, im wesentlichen zylindrischen Umformraumes 130. Ein kegelstumpfförmiger Fußabschnitt 34a des Anschlagelementes 34 ist in einer entsprechend geformten Vertiefung im Bodenteil 40a des Blocks 40 der Matrize 114 angeordnet, so dass das Anschlagelement 34 nur so weit von unten in die Vertiefung 142 eingeführt werden kann, bis die untere Stirnseite des Anschlagelementes 34 gemäß Fig. 1a bündig mit der Unterseite des Bodenteils 40a abschließt.

Die Formteile 116 umfassen jeweils eine senkrecht zur Längsachse 122 verlaufende Betätigungsfläche 116b und eine parallel zur Längsachse 122 verlaufende Eingriffsfläche 116a, die zusammen mit der oberen Stirnseite des Anschlagelementes 34 den Umformraum 130 begrenzen. Im Bereich des oberen freien Endes der Formteile 116 sind die Eingriffsflächen 116a jeweils mit einem der Längsachse 122 zugewandten wulstartigen Vorsprung 120 versehen, mit dem in einer noch zu beschreibenden Weise Blechmaterial 13 des Blechteils 12 in eine Hinterschneidung 18 des Funktionselementes 10 gedrückt werden kann.

Ausgehend von einer eine Auflagefläche 132 für ein Blechteil 12 bildenden Stirnseite der Matrize 114 verjüngt sich die Vertiefung 142 zunächst derart, dass deren Begrenzungswand konisch auf die Längsachse 122 zu verläuft und eine Formfläche 26 bildet, um sich dann zu einem zylindrischen Bereich mit zur Längsachse 122 paralleler Begrenzungswand zu erweitern, so dass eine Ringstufe 27 vorhanden ist.

Die Formteile 116 liegen jeweils mit einer vom Anschlagelement 34 abgewandten Außenfläche 17a an der schräg auf das Anschlagelement 34 zu verlaufenden Formfläche 26 an und sind mit einer senkrecht zur Längsachse 122 der Matrize 114 verlaufenden Unterseite an einem Stützelement 128 abgestützt. Das beispielsweise aus Polyurethan hergestellte Stützelement 128 ist elastisch verformbar und als das Anschlagelement 34 umgebender, einteiliger Hohlzylinder ausgebildet.

Eine Innenfläche 17b jedes Formteils 116 verläuft parallel zur Längsachse 122 der Matrize 114 und somit parallel zur Außenwand des Anschlagelementes 34.

Im Bereich des Übergangs zwischen ihrer Unterseite und ihrer von der Längsachse 122 abgewandten Rückseite sind die Formteile 116 jeweils mit einer Ringschulter 38 versehen, mit der die Formteile 116 in einer Ausgangsstellung, die im rechten Teil von Fig. 1a gezeigt ist, jeweils durch das Stützelement 128 gegen die Ringstufe 27 im Übergangsbereich zwischen dem zylindrischen und dem konischen Bereich der Vertiefung 142 gedrückt werden.

In dieser Ausgangsstellung sind die Innenflächen 17b der Formteile 116 jeweils vom Anschlagelement 34 beabstandet, während in einer Endstellung, die im linken Teil von Fig. 1a gezeigt ist, die Innenflächen 17b der gegen die Rückstellkraft des zusammengedrückten Stützelementes 128 in Richtung des Bodenteils 40a bewegten Formteile 116 jeweils an der Außenwand des Anschlagelementes 34 anliegen.

In Fig. 1b sind die Formteile 116 in einer Endstellung gemäß dem linken Teil von Fig. 1a mit an der Außenwand des Anschlagelementes 34 anliegenden Innenflächen 17b gezeigt.

Gemäß dem Verfahren wird ein Funktionselement 10 an einem Blechteil 12 mittels der erfindungsgemäßen Matrize 114 in der Ausführungsform gemäß den Fig. 1a und 1b wie folgt angebracht:

Zunächst wird ein ebenes Blechteil 12 auf die Auflagefläche 132 der Matrize 114 gelegt, die durch die Stirnseiten der in der Ausgangsstellung gemäß dem rechten Teil von Fig. 1a befindlichen Formteile 116 gebildet wird. Ein von einem nicht dargestellten Setzkopf gehaltenes Funktionselement 10 wird anschließend von oben gegen das Blechteil 12 gepreßt, um dieses in den Umformraum 130 zu drücken und topfartig umzuformen.

Wenn das Funktionselement 10 so weit in den Umformraum 130 eingeführt worden ist, dass es unter Zwischenlage des Blechteils 12 mit den Betätigungsflächen 116b der Formteile 116 in Kontakt gelangt und die Formteile 116 dadurch gegen die Rückstellkraft des Stützelementes 128 nach unten drückt, rutschen die Formteile 116 mit ihren Außenflächen 17a an der schrägen Formfläche 26 entlang, und zwar gleichzeitig nach unten und auf das Anschlagelement 34 zu, bis die Innenflächen 17b der Formteile 116 an der Außenwand des Anschlagelementes 34 zur Anlage kommen.

Dabei wird das durch den Umformvorgang bereits das Kopfteil 10a des Funktionselementes 10 umgebende Blechmaterial 13 des Blechteils 12 gegen die Umfangswand des Kopfteils 10a und in die darin ausgebildeten Aussparungen 21 gedrückt.

Die jeweils an den Eingriffsflächen 116a ausgebildeten Vorsprünge 120 der Formteile 116 drücken während des letzten Teils der Abwärtsbewegung des Funktionselementes 10 zusätzlich Blechmaterial 13 gegen den schräg auf die Längsachse 36 zu verlaufenden Oberflächenbereich des Kopfteils 10a und somit - von der Unterseite 10c des Kopfteils 10a aus gesehen - hinter den Bereich 10d maximalen Durchmessers, d.h. in die Hinterschneidung 18 des Funktionselementes 10.

Folglich ist das Funktionselement 10 formschlüssig mit dem Blechteil 12 verbunden bzw. verhakt und aufgrund der Aussparungen 21 verdrehsicher sowie aufgrund der Hinterschneidung 18 in axialer Richtung fest am Blechteil 12 angebracht. Auf die vorstehend beschriebene Weise wird somit ein teilweise in Fig. 1a oberhalb der Matrize 114 gezeigtes Zusammenbauteil hergestellt.

Grundsätzlich kann das Schaftteil 10b in Abhängigkeit von der jeweiligen Funktion, die das Funktionselement 10 zu erfüllen hat, beliebig ausgeführt sein. Beispielsweise kann das Schaftteil 10b auch - abweichend von Fig. 1a - gewindefrei und lediglich als glatter Bolzen ausgebildet sein und als Lagerzapfen für drehbar zu lagernde Bauteile dienen. Des weiteren kann das freie Ende des Schaftteils 10b auch zur Verrastung mit beispielsweise aufklippsbaren Verbindungsteilen ausgebildet sein.

Die Fig. 1c und 1d zeigen die in der Praxis bevorzugte Ausführung der Matrize der Fig. 1a und 1b. Teile in der Ausführungsform der Fig. 1c und 1d, welche Teilen der Matrize der Fig. 1a und 1b entsprechen, sind mit den gleichen Bezugszeichen gekennzeichnet. Die Beschreibung der entsprechenden Bauteile mit Bezug auf die Fig. 1a und 1b gilt auch für diese bevorzugte Ausführungsform gemäß Fig. 1c und 1d, sofern nichts gegenteiliges gesagt wird.

Die Unterschiede zwischen der bevorzugten Matrize 114 der Fig. 1c und 1d und der sehr ähnlichen Matrize der Fig. 1a und 1b liegt im wesentlichen in der Detailanordnung und -führung der Formteile 116.

Während bei der Ausführungsform gemäß Fig. 1a und 1b die Formteile 116 an einer konusförmigen Formfläche 26 bei der Umformbewegung des Blechteils entlangrutschen, wird für jedes Formteil 116 der Ausführungsform gemäß Fig. 1c und 1d ein getrenntes gehärtetes Führungselement 117 vorgesehen, das in einer entsprechend bearbeiteten Ausnehmung 119 des jeweiligen Formteils 116 angeordnet ist und mittels eines Gewindestifts 121 gegenüber dem oberen Teil 140b der Matrize befestigt ist. Durch die formangepaßte Aufnahme des Führungsblocks 117 in dem jeweiligen Formteil 116 ist die Winkelstellung des jeweiligen Formteils 116 um die mittlere Längsachse 122 der Matrize 114 eindeutig festgelegt; so dass keine Verklemmungen im Betrieb eintreten dürften.

Diese stabile Führung der einzelnen Formteile 116 sorgt auch für eindeutige Verhältnisse im Bereich der jeweiligen Synchronisierungsstifte 123, die zylinderförmig ausgebildet sind und in entsprechenden, einander gegenüberliegenden Teilaufnahmen jeweils zwei benachbarte Formteile 116 angeordnet sind. Die insgesamt sechs vorgesehenen Synchronisierungsstifte 123 stellen sicher, dass alle sechs Formteile 116 sich gleichzeitig und synchronisiert in Achsrichtung 122 bewegen und verhindern somit ein unerwünschtes Verkanten des Elementes oder des Blechteils während des Umformvorganges.

Auch hier soll zum Ausdruck gebracht werden, dass das Vorsehen von sechs Formteilen 116 nicht zwangsläufig erforderlich ist. Die Konstruktion könnte genauso gut mit vier oder drei oder weniger Formteilen 116 realisiert werden.

Die Funktionsbeschreibung der Matrize der Fig. 1a und 1b gilt genauso für die bevorzugte Ausführungsform gemäß Fig. 1c und 1d, was durch die Anwendung der entsprechenden Bezugszeichen in den jeweiligen Figuren zum Ausdruck kommt.

Die Fig. 1e, 1f und 1g zeigen im, übrigen die Anwendung einer Matrize entsprechend den Fig. 1a und 1b für die Anbringung eines Funktionselements in Form eines Gewindestiftes ohne jegliche besondere Kopfform. Hiermit wird einerseits der Funktionsablauf mit einer Matrize entsprechend der Fig. 1a und 1b bzw. 1c und 1d nochmals verdeutlicht, andererseits aber auch zum Ausdruck gebracht, dass diese Matrize mit verschiedenen Funktionselementen verwendet werden kann.

Wie bereits erwähnt ist das Funktionselement bei der Ausführungsform gemäß Fig. 1e bis 1g ein Gewindestift, beispielsweise derart wie in Fig. 2 gezeigt. Dieses Funktionselement hat den besonderen Vorteil, dass es äußerst preisgünstig , beispielsweise durch einen kontinuierlich ablaufenden Walzvorgang aus Stangen- oder Drahtmaterial, hergestellt werden kann. Das Funktionselement besteht ja hier schließlich nur aus einem zylindrischen Teil mit Gewinde, wobei wahlweise der Gewindestift an einem Ende, beispielsweise am freien Ende in Fig. 1g, mit einem Bund 10e, und am unteren Ende in Fig. 1g gegebenenfalls mit Merkmalen wie 21 in Fig. 2 zur Erzeugung einer Verdrehsicherung versehen werden kann, wobei diese Formmerkmale im Rahmen eines kontinuierlichen Walzverfahrens erzeugt werden können.

Im Grunde genommen ist das Einsetzverfahren gemäß Fig. 1a und 1f bereits detailliert angegeben im Zusammenhang mit der Arbeitsweise der Matrize der Fig. 1a und 1b. Es wird hier lediglich zur Verdeutlichung klargestellt, dass es sich bei dem Teil 150 um einen Setzkopf mit Stempel 152 handelt, wobei der Setzkopf 150 eine als Blechniederhalter wirkende Stirnseite 154 und einen mittleren Kanal 156 zur Aufnahme des Gewindestifts und zur Führung des Stempels 152 aufweist. Der Setzkopf 150 befindet sich beispielsweise an einer Zwischenplatte einer Presse oder am oberen Werkzeug der Presse, während sich die Matrize 114 im unteren Werkzeug bzw. in der Zwischenplatte befindet. Auch umgekehrte Anordnungen sind möglich, d.h. mit der Matrize 114 oberhalb des Setzkopfes 150, so dass dann beispielsweise die Matrize 114 am oberen Werkzeug der Presse oder an einer Zwischenplatte der Presse befestigt werden könnte, während der Setzkopf 150 dann an der Zwischenplatte bzw. im unteren Werkzeug der Presse anzuordnen wäre. Auch können der Setzkopf und die Matrize 114 außerhalb einer Presse eingesetzt werden, beispielsweise können sie von einem Roboter aus betätigt werden.

Im Zustand gemäß Fig. 1e ist die gedachte Presse geöffnet, so dass das Blechteil 12 zwischen dem Stirnende der Matrize 114 und dem unteren Stirnende des Gewindestiftes 11 eingebracht werden kann. Beim Schließen der Presse wird das Stirnende 154 des Setzkopfes 150 zunächst gegen das Blechteil 12 gedrückt, so dass dieses an die obere Stirnseite der Formteile 116 gepreßt und unverrückbar gehalten wird. Bei der weiteren Schließbewegung der Presse drückt nunmehr der Stempel 152 das untere Stirnende des Gewindestiftes 11 in Fig. 1e gegen das Blechteil 12 und formt diese in den Umformraum 130 hinein, zunächst ohne dass die Formteile 116 gegenüber der Matrize 114 zurückweichen. Wenn aber das Stirnende des Gewindestiftes 11 das Blechteil 12 gegen die Betätigungsflächen 116b der Formteile 116 drückt, werden diese von der Stellung in Fig. 1e in die Stellung Fig. 1f gedrückt, d.h. die Formteile 116 weichen nunmehr gegenüber dem Körper 140 der Matrize 114 zurück. Die Vorsprünge 120 drücken das Blechmaterial in das die Hinterschneidung bildende Gewinde des unteren Endes des Gewindestiftes 11 sowie in etwaige vorhandene Verdrehsicherungsmerkmale hinein und bilden hiermit eine formschlüssige Verbindung zwischen dem Gewindestift und dem Blechteil. Nach der Öffnung der Presse kann das Zusammenbauteil gemäß Fig. 1g bestehend aus dem Blechteil 12 mit dem darin formschlüssig gehaltenen und das Blechteil 12 nicht durchdringenden Gewindestift 11 aus der Presse entnommen werden.

Ein Vorteil dieses Verfahrens besteht darin, dass das Blechteil 12 bei der Anbringung des Funktionselementes 10 nicht perforiert oder gelocht wird, so dass die Dichtigkeit des Blechteils 12 hinsichtlich Flüssigkeiten und/oder Gasen gewahrt bleibt und ein vielseitig verwendbares, eine Vielzahl von Funktionselementen, die auch unterschiedlich ausgebildet sein können, aufweisendes Zusammenbauteil geschaffen wird.

Die Fig. 2 sowie die Fig. 3a und 3b zeigen jeweils ein als Gewindestift ausgebildetes Funktionselement 10, dessen Anbringung an einem Blechteil 12 grundsätzlich entsprechend der vorstehend beschriebenen Vorgehensweise erfolgt, wobei das Gewinde 11 des Gewindestiftes 10 jeweils einen Hinterschneidungen im Sinne der Erfindung aufweisenden Bereich darstellt.

Derartige Gewindestifte können auf einem vergleichsweise einfachen und kostengünstigen Wege in einem Walzverfahren hergestellt werden, bei dem lange Rundstäbe durch entsprechend geformte Walzflächen aufweisende Walzen mit einem Gewinde versehen werden.

Fig. 2 zeigt einen Gewindestift 10 vor seiner Anbringung an einem Blechteil 12, der sich an seinem vom Blechteil 12 abgewandten Ende verjüngt und dort einen gewindefreien Halsabschnitt 10e aufweist. Auf seiner Umfangswand ist der Gewindestift 10 mit in Fig. 2 lediglich angedeuteten Verdrehsicherungsmerkmalen 21 versehen, die in Form von Erhebungen und/oder Vertiefungen ausgeführt sein können.

Sowohl der gewindefreie Halsabschnitt 10e als auch die Verdrehsicherungsmerkmale 21 können durch entsprechend ausgeführte Walzen bei der Herstellung des Gewindestiftes 10 gleich mit ausgebildet werden, wobei ein dabei entstehender langer Gewindestab zur Herstellung einzelner kurzer Gewindestifte jeweils in den gewindefreien Bereichen durchtrennt wird. Das Schneiden in einzelne Längen kann auch durch das Walzverfahren realisiert werden, und zwar durch eine gesonderte Ausbildung der Gewindewalzwerkzeuge.

Fig. 3a zeigt den Gewindestift 10 von Fig. 2 im am Blechteil 12 angebrachten Zustand, in dem Blechmaterial durch das Formteil oder durch die Formteile der Matrize sowohl in das Gewinde 11 als auch in die Verdrehsicherungsmerkmale 21 gedrückt ist.

Prinzipiell wäre es auch möglich, während der Anbringung des Gewindestiftes 10 am Blechteil 12 mit an den Formteilen der Matrize ausgebildeten Formmerkmalen unter Zwischenlage von Blechmaterial das Gewinde 11 lokal einzudrücken, d. h. gewissermaßen zu zerstören, um auf diese Weise auf der Umfangswand des Gewindestiftes 10 Verdrehsicherungsmerkmale zu schaffen.

Fig. 3b zeigt einen weiteren an einem Blechteil 12 angebrachten Gewindestift 10, der im Unterschied zu den Gewindestiften gemäß Fig. 2 und Fig. 3a an seiner Umfangswand keine Verdrehsicherungsmerkmale aufweist. Stattdessen ist der Gewindestift 10 an seiner dem Blechteil 12 zugewandten Unterseite 10c mit zumindest einer als Verdrehsicherungsmerkmal dienenden Vertiefung 21 versehen, die exzentrisch bezüglich der Längsachse 36 des Gewindestiftes 10 angeordnet ist. Mittels einer entsprechend geformten Matrize bzw. entsprechend geformten Formteilen der Matrize ist Blechmaterial 13 in diese Vertiefung 21 gedrückt worden, wodurch der Gewindestift 10 nicht relativ zum Blechteil 12 verdreht werden kann. Alternativ oder zusätzlich zu der Vertiefung 21 können auch Erhebungen auf der Unterseite 10c des Gewindestiftes 10 als Verdrehsicherungsmerkmale vorgesehen sein.

Grundsätzlich ist auch eine Kombination der vorstehend erläuterten Verdrehsicherungsmerkmale 21 an einem Gewindestift 10 denkbar.

Die vorstehend beschriebene Anbringung des Funktionselementes 10 am Blechteil 12 erfolgt bei allen vorstehend erwähnten Ausführungsformen vorzugsweise in einer heute in der Blechverarbeitung üblichen Weise, nämlich mittels einer Presse oder eines Roboters durch Zusammenwirken eines in den Figuren hauptsächlich nicht dargestellten Setzkopfes mit der Matrize. Dabei wird die Matrize z. B. in einem unteren Werkzeug einer Presse aufgenommen, während der Setzkopf an einem oberen Pressenwerkzeug oder an einer Zwischenplatte der Presse angebracht ist. Auch andere Anbringungsmöglichkeiten sind gegeben. Beispielsweise können die Matrize an der Zwischenplatte der Presse und der Setzkopf am oberen Werkzeug der Presse angebracht werden. Auch sind umgekehrte Anordnungen denkbar, bei denen die Matrize im oberen und der Setzkopf im unteren Werkzeug der Presse oder an der Zwischenplatte angebracht wird. Das Vorsehen einer derartigen Presse ist jedoch nicht zwingend. So sind beispielsweise Anordnungen möglich, bei denen die Matrize und der Setzkopf von einem Roboter getragen werden und die erforderliche Relativbewegung zwischen dem Setzkopf und der Matrize in Richtung der Längsachse des Funktionselementes entweder durch den Roboter selbst oder durch Krafteinwirkung von außen erfolgt.

In an sich bekannter Weise verfügt der jeweils verwendete Setzkopf über einen üblicherweise rohrförmigen Blechniederhalter, der das Blechteil gegen die unbewegliche Stirnseite 140c der Matrize oder gegen die Oberseite des die jeweilige Matrize 114 aufnehmende Werkzeug (nicht gezeigt) klemmt.

Schließlich zeigen die Fig. 4a bis 4e eine Möglichkeit, ein hier in Form eines Gewindestiftes vorliegendes zylindrisches Funktionselement mit einem Blechteil zu verbinden, ohne eine Matrize anwenden zu müssen, die bewegliche Formteile aufweist, was bei den bisherigen Ausführungsformen der Fall war. Der Gewindestift gemäß Fig. 4 ist mit dem Gewindestift der Fig. 2 identisch, weshalb für den Gewindestift das gleiche Bezugszeichen 10 verwendet wird. Auf eine getrennte Beschreibung des Teils wird jedoch verzichtet, da die Beschreibung der Fig. 2 und die Beschreibung der hiermit verwandten Figuren auch hier gilt.

Es soll auch darauf hingewiesen werden, dass obwohl der Gewindestift 10 hier mit einem Gewindezylinder 11 versehen ist, auch ein stangenförmiges Element ohne Gewindezylinder zur Anwendung gelangen könnte, vor allem wenn diese radiale Vertiefungen oder Erhebungen entsprechend den Vertiefungen 21 des Elementes der Fig. 2 aufweist, so dass eine formschlüssige Verbindung mit dem Blechteil im Bereich dieser Vertiefungen bzw. Erhebungen erfolgt.

Fig. 4a zeigt das Blechteil 612 im Ausgangszustand. Das Blechteil wird zunächst einer Blechvorbereitung unterzogen, so dass es die Form gemäß Fig. 4b mit einer topfartigen Erhebung 613 aufweist. Unter Anwendung des Setzkopfes 600 der Fig. 4c und einer Matrize 640 mit einer topfartigen Vertiefung 641 gemäß Fig. 4c wird das untere Endes des Gewindestiftes 610 nunmehr mit dem Blechteil 612 formschlüssig verbunden. Aus Fig. 4c ist ersichtlich, dass die topfartige Vertiefung 641 in der Matrize 614 einen etwas kleineren Innendurchmesser aufweist als der äußere Durchmesser der topfartigen Erhebung 613a des Blechteils.

Bei Schließen der Presse bewegt sich der Setzkopf 600 nach unten. Das untere Stirnende des Gewindestiftes 10 drückt das Blechteil gegen die Matrize 614 und drückt eine nach unten gerichtete Vertiefung in die topfartige Erhöhung 613a hinein, so dass das Blechmaterial der topfartigen Erhebung 613a in die topfartige Vertiefung umgelegt wird und gleichzeitig an die zylindrische Außenwand des Gewindestiftes 610 gedrückt wird, so dass eine topfartige Vertiefung mit formschlüssiger Verbindung an dem Gewindestift entsteht, wie in den Fig. 4d und 4e bei 643 gezeigt ist.

Der Setzkopf 600 weist vorzugsweise auch eine ringförmige Nase 645, um den Gewindestift herum auf, mit einem ringförmigen, keilartigen Freiraum 647 zwischen der ringförmigen Nase 645 und dem Außendurchmesser des Gewindestiftes 10. Diese ringförmige Nase 645 resultiert, wie aus den Fig. 4d bzw. 4e ersichtlich ist, in eine entsprechende ringförmige Vertiefung 649 im Blechteil 12, um den Gewindestift herum, und führt, aufgrund der schräggestellten, radial inneren Fläche der Ringnase 645 zu einer innigen formschlüssigen Verbindung des Blechmaterials 651 mit dem Gewindestift radial innerhalb der ringförmigen Vertiefung 649, so dass in diesem Bereich in ringförmiger Kragen des Blechmaterials um den Gewindestift herum entsteht, der mit dem Gewindestift formschlüssig verbunden ist, d.h. die schräggestellte, radial innere Fläche der Ringnase 645 schiebt Metall radial nach innen während der Schließbewegung der Presse.

Die hier beschriebenen Funktionselemente können z.B. aus allen Materialien hergestellt werden, die die Festigkeitsklasse 5.6 erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, bspw. eine 35B2-Legierung gemäß DIN 1654. Die so gebildeten Befestigungselemente bzw. Mutterelemente eignen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit für die Funktionselemente benutzt werden.

## Patentansprüche

1. Funktionselement (10), insbesondere Befestigungselement, das als insbesondere in einem Walzverfahren hergestellter Gewindestift (10) ausgebildet ist, der zumindest im Wesentlichen einen konstanten Außendurchmesser und einen Endbereich aufweist, der bei der Anbringung des Funktionselementes an einem Bauteil (12) mit diesem in Eingriff gelangt, wobei Material des Bauteils (12) in Eingriff mit einem Gewindegang oder mehreren Gewindegängen, der bzw. die eine Hinterschneidung darstellen, gelangt,
**dadurch gekennzeichnet**
**dass** der Gewindestift im Endbereich eine geschlossene Stirnseite aufweist und dass mindestens ein Verdrehsicherungsmerkmal (21, 21a) in Form einer Erhebung oder einer Vertiefung im Endbereich des Gewindestifts (10) vorgesehen ist, der bei Anbringung des Funktionselementes (10) an ein das Bauteil bildende Blechteil (12) mit diesem in Eingriff gelangt.

2. Funktionselement nach Anspruch 1,
**dadurch gekennzeichnet,**
**dass** zur Verdrehsicherung der Gewindestift an seiner einen Stirnseite (10c), die im angebrachten Zustand an dem Boden eines in einem Blechteil (12), ausgebildeten Topfes anliegt, mit mindestens einem Verdrehsicherungsmerkmal (21a) versehen ist.

3. Funktionselement nach Anspruch 2,
**dadurch gekennzeichnet,**
**dass** das Verdrehsicherungsmerkmal (21a) außermittig an der Stirnseite des Gewindestifts vorgesehen ist.

4. Funktionselement nach Anspruch 1,
**dadurch gekennzeichnet,**
**dass** es an seiner Umfangswand mit mindestens einem das Gewinde (11) unterbrechenden Verdrehsicherungsmerkmal (21) bevorzugt in Form einer oder mehrerer Vertiefungen und/oder Erhebungen versehen ist.

5. Zusammenbauteil bestehend aus wenigstens einem Bauteil (12) und mindestens einem Funktionselement (10), insbesondere Befestigungselement, das als insbesondere in einem Walzverfahren hergestellter Gewindestift (10) ausgebildet ist, der zumindest im Wesentlichen einen konstanten Außendurchmesser und einen Endbereich aufweist, der bei der Anbringung des Funktionselementes an dem Bauteil (12) mit diesem in Eingriff gelangt, wobei Material des Bauteils (12) in Eingriff mit einem Gewindegang oder mehreren Gewindegängen des Gewindestifts, der bzw. die eine Hinterschneidung darstellen, in den Endbereich desselben gelangt,
**dadurch gekennzeichnet**
**dass** der Gewindestift im Endbereich eine geschlossene Stirnseite aufweist und dass mindestens ein Verdrehsicherungsmerkmal (21, 21a) in Form einer Erhebung oder einer Vertiefung im Endbereich des Gewindestifts (10) vorgesehen ist, und dass das als Blechteil vorliegende Bauteil im Endbereich des Gewindestiftes in die Hinterschneidung durch umformtechnisches Fügen im Wesentlichen formschlüssig verbunden oder verhakt ist und in Eingriff mit dem Verdrehsicherungsmerkmal (21) steht.

6. Zusammenbauteil nach Anspruch 5,
**dadurch gekennzeichnet,**
**dass** das Blechteil (12) zumindest im Bereich der Fügeverbindung mit dem Funktionselement (10) nicht perforiert und nicht gelocht ist.

7. Zusammenbauteil nach Anspruch 5 oder 6,
**dadurch gekennzeichnet,**
**dass** bei Verwendung eines eine beschichtete Oberfläche aufweisenden Blechteils (12) diese Oberfläche zumindest auf der dem Funktionselement (10) gegenüberliegenden Seite durch das Anbringen des Funktionselementes (10) an dem Blechteil (12) nicht beschädigt ist.

8. Zusammenbauteil nach zumindest einem der Ansprüche 5 bis 7,
**dadurch gekennzeichnet,**
**dass** der Bereich des Gewindes, der mit dem Blechteil in Anlage steht, die Form einer topfartigen Vertiefung des Blechteils (12) aufweist.

9. Zusammenbauteil nach Anspruch 8,
**dadurch gekennzeichnet,**
**dass** der Boden der topfartigen Vertiefung in Eingriff mit mindestens einem Verdrehsicherungsmerkmal (21 a) an der zugeordneten Stirnseite des Funktionselementes steht.

10. Zusammenbauteil nach Anspruch 8,
**dadurch gekennzeichnet,**
**dass** die Seitenwand der topfartigen Vertiefung in Eingriff mit mindestens einem Verdrehsicherungsmerkmal (21) steht, das das Gewinde (11) unterbricht.

## Claims

1. A functional element (10), in particular a fastener element which is formed as a threaded pin (10), in particular a threaded pin manufactured in a rolling process, which has an at least substantially constant external diameter and an end region which, on the attachment of the functional element to a component (12), enters into engagement therewith, with material of the component (12) entering into engagement with one thread turn or a plurality of thread turns which represents or represent an undercut,
**characterised in that**
the threaded pin has a closed end face in the end region and **in that** at least one feature (21, 21a) forming security against rotation in the form of a raised portion or of a recess is provided in the end region of the threaded pin (10) which, on attachment of the functional element to a sheet metal part (12) forming the component, enters into engagement with the sheet metal part.

2. A functional element in accordance with claim 1,
**characterised in that**
for the security against rotation the threaded pin is provided with at least one feature (21a) providing security against rotation at its end face (10c) which, in the attached state, contacts the base of a pot formed in a sheet metal part (12).

3. A functional element in accordance with claim 2,
**characterised in that**
the feature (21a) providing security against rotation is provided at the end face of the threaded pin away from the centre.

4. A functional element in accordance with claim 1,
**characterised in that**
it is provided at its peripheral wall with at least one feature (21) providing security against rotation which interrupts the thread (11), preferably a feature providing security against rotation in the form of one or more recesses and/or raised portions.

5. A component assembly consisting of at least one component (12) and at least one functional element (10), in particular a fastener element which is formed as a threaded pin (10), in particular a threaded pin manufactured in a rolling process which has an at least substantially constant outer diameter and an end region which, on the attachment of a functional element to the component (12), enters into engagement with the latter, with material of the component (12) entering into engagement with a thread turn or a plurality of thread turns of the threaded pin which represents or represent an undercut in the end region of the latter,
**characterised in that**
the threaded pin has a closed end face in the end region and **in that** at least one feature (21, 21a) providing security against rotation in the form of a raised portion or a recess is provided in the end region of the threaded pin (10) and **in that** the component present as a sheet metal part is connected or hooked in substantially form-fitted manner in the end region of the threaded pin into the undercut by a joining process involving technical reshaping and stands in engagement with the feature (21) providing security against rotation.

6. A component assembly in accordance with claim 5,
**characterised in that**
the sheet metal part (12) is not perforated and not pierced at least in the region of the joint connection to the functional element (10).

7. A component assembly in accordance with claim 5 or claim 6,
**characterised in that**
when using a sheet metal part (12) having a coated surface this surface is not damaged at least at the side opposite to the functional element by the attachment of the functional element to the sheet metal part (12).

8. A component assembly in accordance with at least one of the claims 5 to 7,
**characterised in that**
the region of the thread which stands in contact with the sheet metal part has the form of a pot-like recess of the sheet metal part (12).

9. A component assembly in accordance with claim 8,
**characterised in that**
the base of the pot-like recess stands in engagement with at least one feature (21 a) providing security against rotation at the associated end face of the functional element.

10. A component assembly in accordance with claim 8,
**characterised in that**
the side wall of the pot-like recess stands in engagement with at least one feature (21) providing security against rotation which interrupts the thread (11).

## Revendications

1. Élément fonctionnel (10), en particulier élément de fixation, qui est réalisé sous la forme d'une vis sans tête (10) fabriquée en particulier dans un procédé de roulage, qui présente au moins essentiellement un diamètre extérieur constant et une zone terminale qui, lors du montage de l'élément fonctionnel sur un composant (12), vient en prise avec celui-ci, de sorte que du matériau du composant (12) vient en prise avec un ou plusieurs pas de vis qui représente(nt) une contre-dépouille,
**caractérisé en ce que**
la vis sans tête présente dans la zone terminale une face frontale fermée, et **en ce qu'**il est prévu au moins une empreinte de blocage en rotation (21, 21a) sous la forme d'une surélévation ou d'un renfoncement dans la zone terminale de la vis sans tête (10) qui, lors du montage de l'élément fonctionnel (10) sur une pièce en tôle (12) représentant le composant, vient en prise avec celle-ci.

2. Élément fonctionnel selon la revendication 1,
**caractérisé en ce que**, pour le blocage en rotation, la vis sans tête est dotée, sur l'une de ses faces frontales (10c) qui s'applique dans l'état monté contre le fond d'un pot réalisé dans une pièce en tôle (12), d'une empreinte de blocage en rotation (21a).

3. Élément fonctionnel selon la revendication 2,
**caractérisé en ce que** l'empreinte de blocage en rotation (21a) est prévue de façon excentrée sur la face frontale de la vis sans tête.

4. Élément fonctionnel selon la revendication 1,
**caractérisé en ce qu'**il est doté, au niveau de sa paroi périphérique, d'au moins une empreinte de blocage en rotation (21) qui interrompt le pas de vis (11), de préférence sous la forme d'un ou plusieurs renfoncements et/ou surélévations.

5. Élément structurel composite constitué d'au moins un composant (12) et d'au moins un élément fonctionnel (10), en particulier élément de fixation, qui est réalisé sous la forme d'une vis sans tête (10) fabriquée dans un procédé de roulage, qui présente au moins sensiblement un diamètre extérieur constant et une zone terminale qui, lors du montage de l'élément fonctionnel sur le composant (12), vient en prise avec celui-ci, du matériau du composant (12) venant en prise avec un ou plusieurs pas de vis de la vis sans tête, qui représente(nt) une contre-dépouille, dans la zone terminale de celle-ci,
**caractérisé en ce que**
la vis sans tête présente dans la zone terminale une face frontale fermée, et **en ce qu'**au moins une empreinte de blocage en rotation (21, 21a) sous la forme d'une surélévation ou d'un renfoncement est prévue dans la zone terminale de la vis sans tête (10), et **en ce que** le composant qui se présente sous la forme d'une pièce en tôle est relié dans la zone terminale de la vis sans tête essentiellement par complémentarité de formes par assemblage par technique de déformation dans la contre-dépouille ou accroché dans celle-ci et vient en prise avec l'empreinte de blocage en rotation (21).

6. Élément structurel composite selon la revendication 5,
**caractérisé en ce que** la pièce en tôle (12) n'est ni perforée ni trouée au moins dans la région de la jonction assemblée avec l'élément fonctionnel (10).

7. Élément structurel composite selon la revendication 5 ou 6,
**caractérisé en ce que**, lors de l'utilisation d'une pièce en tôle (12) comportant une surface revêtue, cette surface n'est pas endommagée par la fixation de l'élément fonctionnel (12 10) sur la pièce en tôle (12), du moins du côté opposé à l'élément fonctionnel (10).

8. Élément structurel composite selon l'une au moins des revendications 5 à 7,
**caractérisé en ce que** la zone du pas de vis qui vient en appui contre la pièce en tôle, présente la forme d'un renfoncement de type pot de la pièce en tôle (12).

9. Élément structurel composite selon la revendication 8,
**caractérisé en ce que** le fond du renfoncement du type pot est en prise avec au moins une empreinte de blocage en rotation (21 a) au niveau de la face frontale associée de l'élément fonctionnel.

10. Élément structurel composite selon la revendication 8,
**caractérisé en ce que** la paroi latérale du renfoncement de type pot est en prise avec au moins une empreinte de blocage en rotation (21) qui interrompt le pas de vis (11).
